# EUROPÄISCHE PATENTSCHRIFT

(11) **EP 3 047 772 B1**
(45) Veröffentlichungstag und Bekanntmachung des Hinweises auf die Patenterteilung: **04.01.2017**
(21) Anmeldenummer: 15151742.2
(22) Anmeldetag: 20.01.2015
(51) Int. Cl.: A47L 9/00, A47L 9/02, A47L 5/36, B60B 19/00, G05D 1/02

(54) **Staubsaugerroboter**
Robot vacuuming cleaner
Robot aspirateur

(43) Veröffentlichungstag der Anmeldung: 27.07.2016
(73) Patentinhaber: Eurofilters Holding N.V., 3900 Overpelt (BE)
(72) Erfinder: Sauer, Ralf, 3900 Overpelt (BE); Schultink, Jan, 3900 Overpelt (BE)
(74) Vertreter: Grünecker Patent- und Rechtsanwälte PartG mbB

(56) Entgegenhaltungen:
- WO-A1-02/058527
- WO-A1-02/074150
- US-A1- 2003 202 890

## Beschreibung

Die Erfindung betrifft einen Staubsaugerroboter.

Konventionelle Staubsauger werden von einem Benutzer bedient, der den Staubsauger bewegt und insbesondere die Bodendüse, über die Staub eingesaugt wird, über die zu reinigende Fläche bewegt. Dabei umfassen beispielsweise herkömmliche Bodenstaubsauger ein Gehäuse, das auf Rollen und/oder Gleitkufen gelagert ist. In dem Gehäuse ist ein Staubsammelbehälter angeordnet, in dem sich ein Filterbeutel befindet. Eine Bodendüse ist über ein Saugrohr und einen Saugschlauch mit dem Staubsammelraum verbunden. Bei den herkömmlichen Bodenstaubsaugern ist im Gehäuse weiterhin eine Motorgebläseeinheit angeordnet, die im Staubsammelbehälter einen Unterdruck erzeugt. In Luftströmungsrichtung ist somit die Motorgebläseeinheit hinter der Bodendüse, dem Saugrohr, dem Saugschlauch sowie dem Staubsammelbehälter bzw. dem Filterbeutel angeordnet. Da derartige Motorgebläseeinheiten von gereinigter Luft durchströmt werden, werden sie manchmal auch als Reinluft-Motoren ("Clean-Air-Motor") bezeichnet.

Insbesondere in früheren Zeiten gab es auch Staubsauger, in denen die angesaugte Schmutzluft direkt durch das Motorgebläse hindurch und in einen unmittelbar daran anschließenden Staubbeutel geführt wurde. Beispiele hierfür sind in US 2,101,390, US 2,036,056 und US 2,482,337 gezeigt. Diese Staubsaugerformen sind heutzutage nicht mehr sehr verbreitet.

Derartige Dreckluft- oder Schmutzluft-Motorgebläse werden auch als "Dirty-Air-Motor" oder "Direct-Air-Motor" bezeichnet. Die Verwendung derartiger Dirty-Air-Motoren wird auch in den Dokumenten GB 554 177, US 4,644,606, US 4,519,112, US 2002/0159897, US 5,573,369, US 2003/0202890 oder der US 6,171,054 beschrieben.

In den letzten Jahren gewannen auch Staubsaugerroboter an Popularität. Derartige Staubsaugerroboter müssen nicht mehr von einem Benutzer über die zu reinigende Fläche geführt werden; sie fahren vielmehr selbstständig den Boden ab. Beispiele für derartige Staubsaugerroboter sind beispielsweise aus der EP 2 741 483, der DE 10 2013 100 192 und der US 2007/0272463 bekannt.

Der Nachteil dieser bekannten Staubsaugerroboter besteht darin, dass diese nur eine niedrige Staubaufnahme haben. Dies ist dadurch begründet, dass entweder die Staubaufnahme nur durch den Bürsteffekt einer rotierenden Bürstenwalze erzielt wird, oder Motorgebläseeinheiten mit sehr geringer Leistung verwendet werden. Ein weiterer Nachteil besteht darin, dass diese Staubsaugerroboter aufgrund der kompakten Bauweise nur eine geringe Staubaufnahmekapazität aufweisen.

Ein alternativer Staubsaugerroboter wird in der WO 02/074150 beschrieben. Dieser Staubsaugerroboter, welcher dem Oberbegriff des unabhängigen Anspruchs 1 entspricht, ist zweiteilig aufgebaut und umfasst ein Behälter- oder Gebläsemodul und ein Reinigungskopfmodul, das über einen Schlauch mit dem Gebläsemodul verbunden ist.

Vor diesem Hintergrund besteht die der Erfindung zu Grunde liegende Aufgabe darin, einen verbesserten Staubsaugerroboter bereitzustellen.

Diese Aufgabe wird durch den Gegenstand von Anspruch 1 gelöst. Erfindungsgemäß wird ein Staubsaugerroboter bereitgestellt, umfassend eine auf Rädern gelagerte Staubsammeleinheit, einen Saugschlauch und eine auf Rädern gelagerte Bodendüse, wobei die Bodendüse über den Saugschlauch mit der Staubsammeleinheit fluidisch verbunden ist,
weiterhin umfassend eine Motorgebläseeinheit zum Ansaugen eines Luftstroms durch die Bodendüse, wobei die Motorgebläseeinheit zwischen der Bodendüse und der Staubsammeleinheit derart angeordnet ist, dass ein durch die Bodendüse angesaugter Luftstrom durch die Motorgebläseeinheit hindurch in die Staubsammeleinheit strömt,
wobei die Staubsammeleinheit eine Antriebseinrichtung aufweist, um wenigstens eines der Räder der Staubsammeleinheit anzutreiben, und
wobei die Bodendüse eine Antriebseinrichtung aufweist, um wenigstens eines der Räder der Bodendüse anzutreiben.

Damit wird ein Dirty-Air-Motor bzw. Direct-Air-Motor in vorteilhafter Weise in einem Staubsaugerroboter eingesetzt. Auch bei geringer Motorleistung lässt sich mit dem erfindungsgemäßen Staubsaugerroboter ein hoher Volumenstrom und somit eine hohe Reinigungswirkung auf Teppichen und Hartböden erzielen. Ein Dirty-Air-Motor weist beispielsweise eine maximale Drehzahl von weniger als 30.000 U/min und eine elektrische Aufnahmeleisung von weniger als 900 W auf.

In Luftströmungsrichtung ist die Bodendüse, manchmal auch als "Saugdüse" bezeichnet, vor dem Saugschlauch, und der Saugschlauch vor der Staubsammeleinheit angeordnet. Die mittels der Motorgebläseeinheit durch die Bodendüse angesaugte Luft wird zunächst in den Saugschlauch und anschließend in die Staubsammeleinheit geführt. Aufgrund der fluidischen bzw. strömungstechnischen Verbindung wird ein durchgängiger Luftstrom durch die Bodendüse und den Saugschlauch in die Staubsammeleinheit gewährleistet.

Es hat sich überraschenderweise herausgestellt, dass Schmutzluftmotoren (Dirty-Air-Motoren) auch in Staubsaugerrobotern in vorteilhafter Weise eingesetzt werden können, insbesondere um die durch die Bodendüse angesaugte Schmutzluft durch die Motorgebläseeinheit hindurch in die Staubsammeleinheit zu fördern.

Anders als bei herkömmlichen Staubsaugerrobotern mit Motorgebläseeinheiten, wo im Betrieb insbesondere in der Staubsammeleinheit bzw. der Staubsammelkammer ein Unterdruck herrscht, liegt beim erfindungsgemäßen Staubsaugerroboter zumindest in der Staubsammeleinheit ein Überdruck vor. Auf diese Weise können die Wandstärken der Staubsammeleinheit reduziert bzw. Verstärkungselemente (wie beispielsweise Verstärkungsrippen) in geringerem Umfang eingesetzt oder gar ganz vermieden werden, was auch zu einer Gewichtsreduzierung führt.

Aufgrund des Aufbaus des Staubsaugerroboters mit einer Staubsammeleinheit und einer damit über einen Schlauch verbundenen Bodendüse wird eine besonders vorteilhafte Staubaufnahme bei hoher Flexibilität ermöglicht. Insbesondere kann einerseits die Bodendüse auch in beengten Verhältnissen die zu saugenden Flächen erreichen und andererseits die Staubsammeleinheit ein verhältnismäßig großes Staubaufnahmevolumen bereitstellen. Die Staubsammeleinheit und die Bodendüse sind als separate oder getrennte Einheiten ausgebildet; sie sind jeweils (separat) auf eigenen Rädern gelagert. Die Staubsammeleinheit und die Bodendüse sind unabhängig voneinander bewegbar.

Die Staubsammeleinheit kann drei oder vier Räder, insbesondere genau drei oder genau vier Räder, aufweisen. Die Antriebseinrichtung der Staubsammeleinheit kann ausgebildet sein, eines der Räder, mehrere oder alle Räder der Staubsammeleinheit anzutreiben. Für jedes antreibbare Rad kann die Antriebseinrichtung eine separate oder eigenständige Antriebseinheit aufweisen. Dies erlaubt ein unabhängiges bzw. eigenständiges Antreiben jedes Rades.

Die Bodendüse kann drei oder vier Räder, insbesondere genau drei oder genau vier Räder, aufweisen. Die Antriebseinrichtung der Staubsammeleinheit kann ausgebildet sein, eines der Räder, mehrere oder alle Räder der Staubsammeleinheit anzutreiben. Für jedes antreibbare Rad kann die Antriebseinrichtung eine separate oder eigenständige Antriebseinheit aufweisen. Dies erlaubt ein unabhängiges bzw. eigenständiges Antreiben jedes Rades.

Die Antriebseinrichtung der Staubsammeleinheit kann von der Antriebseinrichtung der Bodendüse getrennt oder separat ausgebildet sein. Insbesondere können die Staubsammeleinheit und die Bodendüse unabhängig voneinander angetrieben werden. Sie können sich beispielsweise in unterschiedliche Richtungen bewegen. Auch kann eine der beiden nicht bewegt werden, während die andere bewegt wird.

Bei dem Staubsaugerroboter kann die Motorgebläseeinheit zwischen der Bodendüse und dem Saugschlauch derart angeordnet sein, dass der durch die Bodendüse angesaugte Luftstrom durch die Motorgebläseeinheit hindurch in den Saugschlauch strömt. Bei einer derartigen Ausbildung liegt im Betrieb auch im Saugschlauch ein Überdruck vor. Damit muss die Saugschlauchwand allenfalls geringfügig verstärkt werden.

Bei den zuvor beschriebenen Staubsaugerrobotern kann die Motorgebläseeinheit auf und/oder über der Bodendüse, insbesondere unmittelbar auf und/oder über der Bodendüse, angeordnet sein. Dies führt zu einer vorteilhaften Saugleistung. Darüber hinaus kann ein kompakter Aufbau der Einheit aus Bodendüse und Motorgebläseeinheit erreicht werden. Beispielsweise kann die Motorgebläseeinheit derart angeordnet sein, dass durch die Bodendüse eingesaugte Luft unmittelbar von der Bodendüse in die Motorgebläseeinheit eintritt.

Die Motorgebläseeinheit kann über ein Rohrstück mit der Bodendüse fluidisch verbunden sein. In diesem Fall ist die Motorgebläseeinheit nicht mehr unmittelbar auf und/oder über der Bodendüse angeordnet. Das Rohrstück kann insbesondere eine Länge von 10 mm bis 300 mm, vorzugsweise von 10 mm bis 100 mm haben.

Alternativ kann die Motorgebläseeinheit zwischen dem Saugschlauch und der Staubsammeleinheit derart angeordnet sein, dass der durch die Bodendüse eingesaugt Luftstrom durch den Saugschlauch hindurch in die Motorgebläseeinheit und durch die Motorgebläseeinheit hindurch in die Staubsammeleinheit strömt. Auf diese Weise kann auf Seiten der Bodendüse eine leichte und kompakte Anordnung erzielt werden, was zu einer hohen Beweglichkeit der Bodendüse und der Erreichbarkeit selbst beengter Flächen führt.

Insbesondere kann die Staubsammeleinheit ein Gehäuse und einen in dem Gehäuse angeordneten Staubabscheider umfassen, wobei die Motorgebläseeinheit auf, an oder in dem Gehäuse angeordnet ist.

Das Gehäuse kann eine Gehäusewand umfassen, die besondere aus Kunststoff besteht.

Die Anordnung des Staubabscheiders innerhalb des Gehäuses der Staubsammeleinheit und die Anordnung der Motorgebläseeinheit an oder in dem Gehäuse erlauben eine kompakte Ausgestaltung der Staubsammeleinheit und damit des Staubsaugerroboters insgesamt.

Die Motorgebläseeinheit kann (insbesondere im Betrieb des Staubsaugerroboters) über oder oberhalb des Staubabscheiders oder auf gleicher Höhe wie der Staubabscheider angeordnet sein. Die Motorgebläseeinheit ist somit insbesondere nicht unterhalb des Staubabscheiders angeordnet. Damit muss die Förderung der Schmutzluft durch die Motorgebläseeinheit nicht oder nur in geringem Umfang entgegen der Schwerkraft erfolgen.

Die Motorgebläseeinheit kann auf dem Gehäuse angeordnet sein. Dabei kann insbesondere der Staubabscheider im Betrieb des Staubsaugerroboters unterhalb der Motorgebläseeinheit oder auf gleicher Höhe angeordnet sein.

Bei den zuvor beschriebenen Staubsaugerrobotern können eines der Räder, mehrere oder alle Räder der Staubsammeleinheit und/oder eines der Räder, mehrere oder alle Räder der Bodendüse omnidirektionale Räder sein. Die Verwendung omnidirektionaler Räder ermöglicht eine sehr flexible und vielseitige Bewegung der Staubsammeleinheit bzw. der Bodendüse.

Jedes omnidirektionales Rad weist an seinem Umfang eine Mehrzahl von drehbar gelagerten Rollen bzw. Rollkörpern auf, deren Achsen nicht parallel zur Radachse (des omnidirektionalen Rads) verlaufen. Insbesondere können die Achsen der Rollen schräg oder quer zur Radachse verlaufen bzw. ausgerichtet sein. Ein Beispiel für ein omnidirektionales Rad ist ein Mecanum-Rad, das unter anderem in der US 3,876,255 beschrieben wird.

Die Motorgebläseeinheit kann derart ausgebildet sein, dass sie bei einer elektrischen Aufnahmeleistung von weniger als 450 W gemäß DIN EN 60312-1 bei Blende 8 einen Volumenstrom von mehr als 30 l/s, insbesondere mehr als 35 l/s, erzeugt. Alternativ oder zusätzlich kann die Motorgebläseeinheit derart ausgebildet sein, dass sie bei einer elektrischen Aufnahmeleistung von weniger als 250 W gemäß DIN EN 60312-1 bei Blende 8 einen Volumenstrom von mehr als 25 l/s, insbesondere mehr als 30 l/s, erzeugt. Alternativ oder zusätzlich kann die Motorgebläseeinheit derart ausgebildet sein, dass sie bei einer elektrischen Aufnahmeleistung von weniger als 100 W gemäß DIN EN 60312-1 bei Blende 8 einen Volumenstrom von mehr als 10 l/s, insbesondere mehr als 15 l/s, erzeugt.

Auf diese Weise wird ein besonders effizienter Staubsaugerroboter erhalten, der insbesondere im Vergleich zu herkömmlichen Staubsaugerrobotern eine stark erhöhte Saugkraft aufweist.

Die Luftdaten eines Staubsaugers bzw. einer Motorgebläseeinheit werden gemäß DIN EN 60312-1:2014-01 bestimmt. Insbesondere wird auf Abschnitt 5.8 verwiesen. Dabei wird die Messeinrichtung in der Ausführung B gemäß Abschnitt 7.3.7.3 verwendet. Falls eine Motorgebläseeinheit ohne Staubsaugergehäuse gemessen wird, wird ebenfalls die Messeinrichtung B verwendet. Für gegebenenfalls notwendige Zwischenstücke zum Anschluss an die Messkammer gelten die Ausführungen in Abschnitt 7.3.7.1.

Für den Begriff "Luftstrom" gemäß DIN EN 60312-1 werden auch die Begriffe "Volumenstrom" und "Saugluftstrom" verwendet.

Die Bodendüse kann eine Bodenplatte mit einer Grundfläche aufweisen, die im Betrieb des Staubsaugerroboters der zu saugenden Fläche zugewandt ist, wobei die Bodenplatte parallel zur Grundfläche wenigstens einen Luftströmungskanal mit einer seitlich in der Bodenplatte vorgesehenen Öffnung aufweist. Insbesondere kann die Bodenplatte mit ihrer Grundfläche im Betrieb des Staubsaugerroboters auf der zu saugenden Fläche aufliegen oder, beispielsweise mittels einer Borstenleiste, von dieser beabstandet sein. Die Bodenplatte kann parallel zur Grundfläche wenigstens einen gekrümmten Luftströmungskanal aufweisen. Der gekrümmte Luftströmungskanal kann die Form eines Kreisrings oder eines Kreisringabschnitts aufweisen.

Die Bodenplatte wird auch als Düsensohle bezeichnet. Die Bodendüse weist eine Saugöffnung zur Herstellung einer fluidischen Verbindung mit der Motorgebläseeinheit auf. Diese Saugöffnung steht in fluidischer, d.h. strömungstechnischer, Verbindung mit dem wenigstens einen Luftströmungskanal. Durch den wenigstens einen, insbesondere einen oder mehrere Luftströmungskanäle wird der Anpressdruck der Bodendüse bei guter Saugleistung in vorteilhafter Weise eingestellt.

Der Saugschlauch kann einen Durchmesser in einem Bereich von 25 mm bis 50 mm und/oder eine Länge in einem Bereich von 500 mm bis 2500 mm haben. Der Saugschlauch kann flexibel ausgebildet sein, insbesondere so dass er beim bestimmungsgemäßen Gebrauch des Staubsaugerroboters deformierbar ist. Der Saugschlauch kann teilweise oder vollständig aus Kunststoff bestehen. Er kann insbesondere eine Kunststoffwand und/oder eine Verstärkung aus Metall (beispielsweise einen Spiraldraht) umfassen. Der Saugschlauch kann als Stretch-Schlauch ausgebildet sein. Er weist somit eine veränderbare Länge auf und kann auf ein Mehrfaches seiner ungestreckten (ruhenden) Länge ausgezogen werden.

Der Saugschlauch kann über seine Länge einen konstanten oder einen variablen Durchmesser aufweisen. Insbesondere kann der Saugschlauch eine konische Form aufweisen, wobei sich vorzugsweise der Durchmesser zur Bodendüse hin verringert. Die oben angegebenen Durchmesser beziehen sich insbesondere auf den kleinsten Durchmesser des Saugschlauchs.

Die Staubsammeleinheit kann derart ausgebildet und/oder die Motorgebläseeinheit derart angeordnet sein, dass keine Berührung des Gebläserads der Motorgebläseeinheit mit einer Prüfsonde gemäß IEC/EN 60335 durch die Bodendüse möglich ist. Hier wird auf Abschnitt 8 der Version DIN EN 60335-1: 2012-10 Bezug genommen. Insbesondere soll die Prüfsonde B verwendet werden.

Dies verringert die Gefahr einer Beschädigung der Motorgebläseeinheit und die Gefahr von Verletzungen beim Anfassen der Bodendüse bei laufendem Motor.

Der Staubsaugerroboter kann ein Beutelsauger sein. Ein Beutelsauger ist ein Staubsauger, bei dem der eingesaugte Staub in einem Staubsaugerfilterbeutel abgeschieden und gesammelt wird. Die Filterfläche des Staubsaugerfilterbeutels kann wenigstens 800 cm² betragen. Der Staubsaugerroboter kann insbesondere ein Beutelsauger für Wegwerfbeutel sein.

Die Filterfläche eines Staubsaugerfilterbeutels bezeichnet die gesamte Fläche des Filtermaterials, das sich zwischen bzw. innerhalb der randseitigen Nähte (beispielsweise Schweiß- oder Klebenähte) befindet. Dabei sind auch möglicherweise vorhandene Seiten- oder Oberflächenfalten zu berücksichtigen. Die Fläche der Beutelfüllöffnung bzw. Eintrittsöffnung (einschließlich einer dieser Öffnung umgebenden Naht) ist nicht Teil der Filterfläche.

Der Staubsaugerfilterbeutel kann ein Flachbeutel sein oder eine Klotzbodenform aufweisen. Ein Flachbeutel wird durch zwei Seitenwände aus Filtermaterial gebildet, die entlang ihrer Umfangsränder miteinander verbunden (beispielsweise verschweißt oder verklebt) sind. In einer der beiden Seitenwände kann die Beutelfüllöffnung bzw. Eintrittsöffnung vorgesehen sein. Die Seitenflächen bzw. -wände können jeweils eine rechteckige Grundform aufweisen. Jede Seitenwand kann eine oder mehrere Lagen Vlies und/oder Vliesstoff umfassen.

Der Staubsaugerroboter in Form eines Beutelsaugers kann einen Staubsaugerfilterbeutel umfassen, wobei der Staubsaugerfilterbeutel in Form eines Flachbeutels und/oder als Wegwerfbeutel ausgebildet ist.

Die Beutelwand des Staubsaugerfilterbeutels kann eine oder mehrere Lagen eines Vlieses und/oder eine oder mehrere Lagen eines Vliesstoffes umfassen. Sie kann insbesondere ein Laminat aus einer oder mehrerer Lagen Vlies und/oder einer oder mehrerer Lagen Vliesstoff umfassen. Ein derartiges Laminat ist beispielsweise in der WO 2007/068444 beschrieben.

Der Begriff Vliesstoff wird im Sinne der Norm DIN EN ISO 9092:2010 verstanden. Dabei werden insbesondere Film- und Papierstrukturen, insbesondere Filterpapier, nicht als Vliesstoff angesehen. Ein "Vlies" ist eine Struktur aus Fasern und/oder Endlosfilamenten oder Kurzfasergarnen, die durch irgendein Verfahren zu einem Flächengebilde geformt wurden (ausgenommen die Verflechtung von Garnen wie in gewobenem Gewebe, geknüpftem Gewebe, Maschenware, Spitze oder getuftetem Gewebe), allerdings nicht durch irgendein Verfahren verbunden wurden. Durch ein Verbindeverfahren wird aus einem Vlies ein Vliesstoff. Das Vlies oder der Vliesstoff können trockengelegt, nassgelegt oder extrudiert sein.

Der Staubsaugerroboter kann einen Ausblasfilter, insbesondere mit einer Filterfläche von wenigstens 800 cm², umfassen. Der Ausblasfilter kann insbesondere plissiert bzw. gefaltet ausgebildet sein. Damit lässt sich eine große Oberfläche bei kleinerer Grundfläche erzielen. Dabei kann der Ausblasfilter in einer Halterung vorgesehen sein, wie sie beispielsweise in der Europäischen Patentanmeldung Nr. 14179375.2 beschrieben ist. Derartige Ausblasfilter erlauben den Einsatz von Staubsaugerfilterbeuteln mit geringer Abscheideleistung, beispielsweise von einlagigen Staubsaugerfilterbeuteln. Als Staubsaugerfilterbeutel mit geringer Abscheideleistung kann beispielsweise ein Beutel eingesetzt werden, bei dem das Filtermaterial der Beutelwand aus einem Spinnvlies (Spunbond) besteht, das ein Flächengewicht von 15 g/m² bis 100 g/m² aufweist. Insbesondere kann also der Staubsaugerfilterbeutel einlagig ausgebildet sein. Alternativ kann beispielsweise ein Beutel eingesetzt werden, bei dem das Filtermaterial der Beutelwand aus einem Laminat aus einem Spinnvlies, einem Meltblown und einem weiteren Spinnvlies (SMS) besteht.

Alternativ kann der Staubsaugerroboter ein beutelloser Sauger, insbesondere mit einem wie zuvor beschriebenen Ausblasfilter mit einer Filterfläche von wenigstens 800 cm², sein. Ein beutelloser Sauger ist ein Staubsauger, bei dem der eingesaugte Staub ohne einen Staubsaugerfilterbeutel abgeschieden und gesammelt wird. In diesem Fall kann die Staubsammeleinheit einen Prallabscheider oder einen Fliehkraftabscheider bzw. einen Zyklonabscheider umfassen.

Die Motorgebläseeinheit kann ein, insbesondere einstufiges, Radialgebläse aufweisen. Bei einem Radialgebläse wird die Luft parallel oder axial zur Antriebsachse des Gebläserads angesaugt und durch die Rotation des Gebläserads umgelenkt, insbesondere um etwa 90° umgelenkt, und radial ausgeblasen.

Grundsätzlich kann die Bodendüse eine aktive oder eine passive Bodendüse sein. Eine aktive Bodendüse weist in der Saugöffnung eine Bürstenwalze (manchmal auch als Klopf- und/oder Rotationsbürste bezeichnet) auf. Die Bürstenwalze kann elektromotorisch antreibbar sein. Eine passive Bodendüse weist keine Bürstenwalze auf.

Bei den beschriebenen Staubsaugerrobotern kann aufgrund der Gesamtkonstruktion auch mit einer passiven Bodendüse, also ohne Bürstenwalze, eine sehr gute Effizienz und Saugleistung erzielt werden. Beim Einsatz von passiven Bodendüsen vereinfacht sich der Aufbau und reduziert sich damit das Gewicht der Bodendüse, wodurch die Antriebseinrichtung der Bodendüse einen geringeren Leistungsbedarf hat.

Die beschriebenen Staubsaugerroboter sind zum selbständigen bzw. autonomen Abfahren einer zu reinigenden Fläche ausgebildet.

Die beschriebenen Staubsaugerroboter können eine Steuer- und Navigationseinrichtung zum selbständigen Verfahren der Bodendüse und/oder der Staubsammeleinheit umfassen. Damit wird ein autonomes Staubsaugen durch den Staubsaugerroboter ermöglicht. Die Steuer- und Navigationseinrichtung kann insbesondere zur Ansteuerung der Antriebseinrichtung der Staubsammeleinheit, der Antriebseinrichtung der Bodendüse und/oder der Motorgebläseeinheit ausgebildet sein. Die Steuer- und Navigationseinrichtung kann an oder in der Staubsammeleinheit und/oder an oder in der Bodendüse angeordnet sein. Insbesondere kann die Steuer- und Navigationseinrichtung ausschließlich an oder in der Staubsammeleinheit angeordnet sein. In diesem Fall kann auch die Steuerung und Navigation der Bodendüse auf Seiten der Staubsammeleinheit durchgeführt werden.

Die beschriebenen Staubsaugerroboter können eine Einrichtung zur Übermittlung von Steuersignalen von der Steuer- und Navigationseinrichtung zur Bodendüse aufweisen. Die Einrichtung zur von Steuersignalen kann zur Ausbildung einer drahtgebundenen oder einer drahtlosen Übermittlung eingerichtet sein.

Die beschriebenen Staubsaugerroboter können eine oder mehrere Einrichtungen zur Ortsbestimmung umfassen. Bei den Einrichtungen zur Ortsbestimmung kann es sich insbesondere um Kameras, Wegsensoren und/oder Abstandssensoren handeln. Die Abstandssensoren können beispielsweise auf Schallwellen oder elektromagnetischen Wellen basieren. Die Einrichtungen zur Ortsbestimmung können an oder in der Staubsammeleinheit und/oder an oder in der Bodendüse angeordnet sein.

Die beschriebenen Staubsaugerroboter können eine kabellose Stromversorgung aufweisen. Insbesondere können sie einen Akku zur Stromversorgung aufweisen.

Die Staubsammeleinheit kann eine Hebeeinrichtung zum Verstellen der Höhe der Unterseite der Staubsammeleinheit, insbesondere der Unterseite des Gehäuses der Staubsammeleinheit, über dem Boden aufweisen. Damit kann der Abstand der Unterseite der Staubsammeleinheit bzw. die Bodenfreiheit der Staubsammeleinheit verstellt werden. Dies erlaubt, beispielsweise in einer Aufladeposition des Staubsaugerroboters, die Höhe der Unterseite über dem Boden zu erhöhen, um die Bodendüse unter die Staubsammeleinheit bzw. ihr Gehäuse zu fahren.

Weitere Merkmale werden anhand der Figuren beschrieben. Dabei zeigt
- Figur 1: ein erstes Ausführungsbeispiel eines Staubsaugerroboters;
- Figur 2: ein Blockschaltbild eines Staubsaugerroboters,
- Figur 3: ein zweites Ausführungsbeispiel eines Staubsaugerroboters.

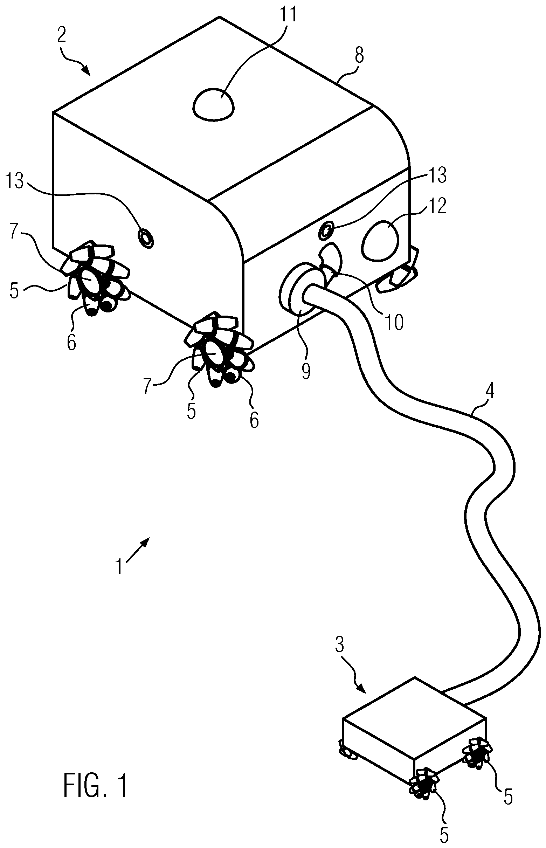

Figur 1 ist eine schematische Darstellung eines ersten Ausführungsbeispiels eines Staubsaugerroboters 1. Der gezeigte Staubsaugerroboter 1 umfasst eine Staubsammeleinheit 2 und eine Bodendüse 3, die über einen flexiblen Saugschlauch 4 mit der Staubsammeleinheit 2 verbunden ist.

Die Staubsammeleinheit 2 ist auf vier Rädern 5 gelagert, wobei jedes dieser Räder als omnidirektionales Rad ausgebildet ist. Jedes omnidirektionale Rad 5 weist an seinem Umfang eine Mehrzahl von drehbar gelagerten Rollen 6 auf. Die Drehachsen der Rollen 6 sind alle nicht parallel zur Radachse 7 des jeweiligen omnidirektionalen Rads. So können beispielsweise die Drehachsen der Rollen einen Winkel von 45° zur jeweiligen Radachse einnehmen. Die Oberflächen der Rollen bzw. Rollkörper ist gewölbt bzw. gebogen.

Beispiele für derartige omnidirektionalen Räder sind in der US 3,876,255, der US 2013/0292918, der DE 10 2008 019 976 oder der DE 20 2013 008 870 beschrieben.

Die Staubsammeleinheit 2 weist eine Antriebseinrichtung auf, um die Räder 5 der Staubsammeleinheit anzutreiben. Die Antriebseinrichtung kann für jedes Rad 5 eine separate Antriebseinheit, beispielsweise in Form eines Elektromotors, aufweisen, so dass jedes Rad 5 unabhängig von den anderen Rädern antreibbar ist. Die Rollen 6 sind antriebslos drehbar gelagert.

Durch geeigneten Antrieb einzelner oder aller Räder 5 lässt sich die Staubsammeleinheit 2 in beliebige Richtungen bewegen. Werden beispielsweise alle vier Räder 5 mit gleicher Geschwindigkeit in gleicher Drehrichtung bewegt, so fährt die Staubsammeleinheit geradeaus. Durch eine gegenläufige Bewegung der Räder auf einer Seite kann ein seitliches Verfahren bzw. Verschieben erreicht werden.

Grundsätzlich müssen nicht alle Räder antreibbar ausgebildet sein; einzelne Räder können auch ohne eigenen Antrieb vorgesehen sein. Darüber hinaus ist es auch möglich, dass einzelne Räder, auch wenn sie grundsätzlich antreibbar sind, für bestimmte Bewegungen nicht angetrieben werden.

In alternativen Ausführungsformen können auch weniger oder mehr als vier Räder in Form von omnidirektionalen Rädern ausgebildet sein. Ein Beispiel mit drei omnidirektionalen Rädern ist in der US 2007/0272463 beschrieben.

Auch die Bodendüse 3 ist in dem gezeigten Beispiel mit vier omnidirektionalen Rädern 5 ausgestattet. Diese Räder sind in dem Ausführungsbeispiel kleiner dimensioniert als die Räder der Staubsammeleinheit 2. In analoger Form weist auch die Bodendüse 3 eine Antriebseinrichtung für die Räder 5 auf. Auch hier umfasst die Antriebseinrichtung für jedes Rad eine einzelne Antriebseinheit, beispielsweise in Form von Elektromotoren, um jedes Rad separat und unabhängig von den übrigen Rädern anzutreiben. Auf diese Weise kann auch die Bodendüse durch geeignetes Antreiben der Räder in beliebige Richtungen verfahren werden.

Die Bodendüse 3 weist eine Bodenplatte mit einer Grundfläche auf, die im Betrieb des Staubsaugerroboters dem Boden, d.h. der zu saugenden Fläche, zugewandt ist. In der Bodenplatte sind parallel zur Grundfläche ein oder mehrere Luftströmungskanäle eingebracht, durch den die Schmutzluft eingesaugt wird. Der oder die Luftströmungskanäle können eine seitlich in der Bodenplatte vorgesehene Öffnung aufweisen. Der Luftströmungskanal kann gerade oder gekrümmt, insbesondere in Form eines Kreisrings oder eines Kreisringabschnitts ausgebildet sein. Insbesondere für seitliche Bewegungen der Bodendüse kann die Form eines Kreisringabschnitts oder eines Kreisrings vorteilhaft sein.

In den gezeigten Beispielen weist die Staubsammeleinheit 2 ein Gehäuse 8 auf, an und auf dem eine Motorgebläseeinheit 9 angeordnet ist. Von der Motorgebläseeinheit 9 führt ein Rohrstück 10 zu einem Staubsaugerfilterbeutel, der einen Staubabscheider bildet. Der Staubsaugerfilterbeutel kann in herkömmlicher Weise, beispielsweise mittels einer Halteplatte, im Innern des Gehäuses 8 herausnehmbar befestigt sein.

In der gezeigten Anordnung wird somit durch die Bodendüse 3, den Saugschlauch 4, die Motorgebläseeinheit 9 und das Rohrstück 10 eine durchgängige fluidische bzw. strömungstechnische Verbindung mit dem Staubabscheider hergestellt. Die Motorgebläseeinheit 9 ist dabei zwischen dem Saugschlauch 4 und dem Staubabscheider angeordnet, so dass durch die Bodendüse angesaugte Schmutzluft durch die Motorgebläseeinheit 9 hindurch (insbesondere über das Rohrstück 10) in den im Innern des Gehäuses 8 angeordneten Staubsaugerfilterbeutel strömt.

Bei der Motorgebläseeinheit 9 handelt es sich somit um einen Dirty-Air-Motor oder Schmutzluftmotor. Es handelt sich insbesondere um eine Motorgebläseeinheit, die ein Radialgebläse aufweist.

Die Motorgebläseeinheit weist bei einer elektrischen Aufnahmeleistung von weniger als 450 W einen Volumenstrom von mehr als 30 l/s (bestimmt gemäß DIN EN 60312-1:2014-01 bei Blende 8), bei einer elektrischen Aufnahmeleistung von weniger als 250 W einen Volumenstrom vom mehr als 25 l/s und bei einer elektrischen Aufnahmeleistung von weniger als 100 W einen Volumenstrom von mehr als 10 l/s auf.

Der Gebläsedurchmesser kann 60 mm bis 160 mm betragen. Beispielsweise kann eine Motorgebläseeinheit der Firma AMETEC, Inc.verwendet werden, die auch in Soniclean Upright Staubsaugern (z. B. SONICLEAN VT PLUS) eingesetzt wird.

Die Motorgebläseeinheit des SONICLEAN VT PLUS wurde gemäß DIN EN 60312-1:2014-01 wie oben erläutert charakterisiert. Die Motorgebläseeinheit wurde ohne Staubsaugergehäuse gemessen. Für notwendige Zwischenstücke zum Anschluss an die Messkammer gelten die Ausführungen in Abschnitt 7.3.7.1. Die Tabelle zeigt, dass mit niedrigen Drehzahlen und geringer Aufnahmeleistung hohe Volumenströme erzielt werden.

| AMETEK "dirty air" (Gebläseraddurchmesser 82 mm) bei Blende 8 (40 mm) | | | | |
|---|---|---|---|---|
| Aufnahme leistung | Spannung | Drehzahl | Unterdruck Box | Volumen strom |
| [W] | [V] | [RPM] | [kPa] | [l/s] |
| 200 | 77 | 15.700 | 0,98 | 30,2 |
| 250 | 87 | 17.200 | 1,17 | 32,9 |
| 300 | 95 | 18.400 | 1,34 | 35,2 |
| 350 | 103 | 19.500 | 1,52 | 37,5 |
| 400 | 111 | 20.600 | 1,68 | 39,4 |
| 450 | 117 | 21.400 | 1,82 | 41,0 |

Im Betrieb wird durch die Motorgebläseeinheit 9 Luft angesaugt. Die Luftströmung tritt dabei durch eine Öffnung der Bodendüse 3 in den Staubsaugerroboter 1 ein und strömt durch den Saugschlauch 4 in die Motorgebläseeinheit 9. Aufgrund der Anordnung der Motorgebläseeinheit 9 - in Luftströmungsrichtung - vor dem Staubabscheider (in Form eines Staubsaugerfilterbeutels) herrscht im Gehäuse 8, wie auch im Staubabscheider ein Überdruck.

Bei herkömmlichen Staubsaugern ist die Motorgebläseeinheit in der Staubsammeleinheit in Luftströmungsrichtung hinter dem Staubabscheider, beispielsweise dem Staubsaugerfilterbeutel; angeordnet, was dazu führt, dass insbesondere das Gehäuse der Staubsammeleinheit einem Unterdruck ausgesetzt ist. Um eine Deformation des Gehäuses aufgrund des Unterdrucks zu vermeiden, muss dieses typischerweise verstärkt werden, beispielsweise mittels entsprechender Verstärkungsrippen. Bei der in Figur 1 illustrierten Konfiguration ist dies aufgrund des Überdrucks im Gehäuse 8 nicht oder nur in geringem Maße erforderlich.

Der Staubsaugerroboter 1 umfasst eine Steuer- und Navigationseinrichtung zum selbständigen Verfahren der Staubsammeleinheit 2 und der Bodendüse 3. Hierfür ist in dem Gehäuse 8 der Staubsammeleinheit 2 ein entsprechend programmierter Mikrocontroller angeordnet. Die Steuer- und Navigationseinrichtung ist mit Einrichtungen zur Ortsbestimmung verbunden. Hierzu gehören Kameras 11 und 12 sowie Abstandssensoren 13. Bei den Abstandssensoren kann es sich beispielsweise um Lasersensoren handeln.

Die Navigation des Staubsaugerroboters erfolgt in bekannter Weise, wie sie beispielsweise in der WO 02/074150 beschrieben ist. Die im Gehäuse 8 angeordnete Steuer- und Navigationseinrichtung steuert sowohl die Antriebseinheit der Staubsammeleinheit 2 als auch die Antriebseinheit der Bodendüse 3.

Für letzteres ist eine Einrichtung zur Übermittlung von Steuersignalen von der Steuer- und Navigationseinrichtung im Gehäuse 8 der Staubsammeleinheit 2 zur Bodendüse 3, insbesondere zur Antriebseinrichtung der Bodendüse, vorgesehen. Hierfür können auf Seiten der Staubsammeleinheit 2 und der Bodendüse 3 jeweils drahtlose Sender/Empfänger angeordnet sein. Alternativ kann entlang des Saugschlauchs auch eine drahtgebundene Verbindung zur Übermittlung von Steuersignalen vorgesehen sein.

Auch die Bodendüse 3 kann unterstützend eine oder mehrere Einrichtungen zur Ortsbestimmung umfassen. Beispielsweise können an der Bodendüse Wegsensoren und/oder Abstandssensoren vorgesehen sein. Um die entsprechenden Informationen für die Steuerung und Navigation zu verwenden, werden entsprechende Signale von der Bodendüse zur Steuer- und Navigationseinrichtung übermittelt.

Die Energieversorgung des Staubsaugerroboters kann kabellos erfolgen. Die Stromversorgung der Bodendüse, insbesondere ihrer Antriebseinrichtung, erfolgt über ein Stromversorgungskabel im oder entlang des Saugschlauchs 4.

Alternativ oder zusätzlich kann die Staubsammeleinheit 2 auch Akkus aufweisen, die beispielsweise kabelgebundene oder kabellos (induktiv) geladen werden können. Zum Aufladen der Akkus kann sich der Staubsauger 1 beispielsweise selbsttätig zu einer Ladestation bewegen. Sofern die Stromversorgung der Antriebseinrichtung der Bodendüse nicht ausschließlich über eine Stromverbindung über den Saugschlauch 4 erfolgt, kann die Bodendüse 3 selbst auch Akkus aufweisen.

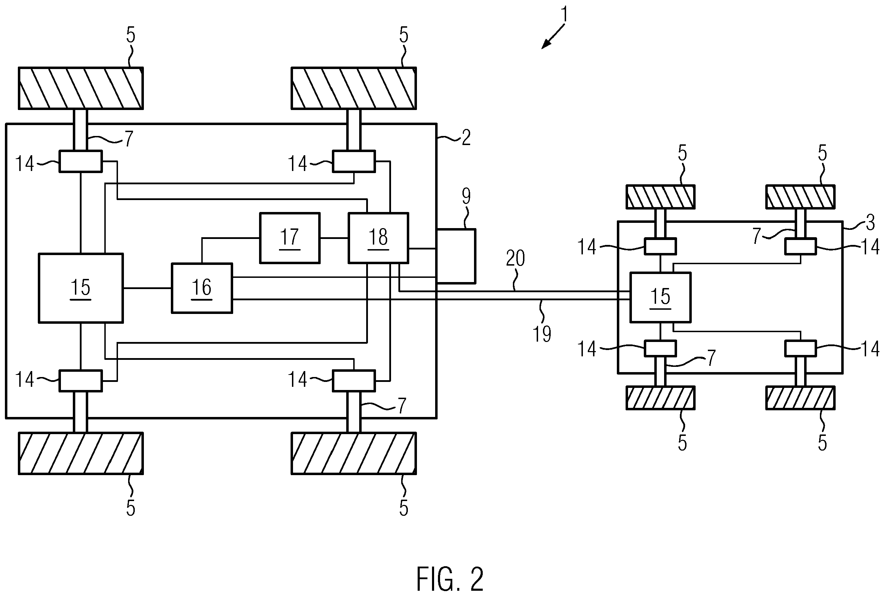

Figur 2 ist ein schematisches Blockschaltbild eines Staubsaugerroboters 1 mit einer Staubsammeleinheit 2 und einer Bodendüse 3. Die Antriebseinrichtung für die Räder 5 der Staubsammeleinheit 2 umfasst zum einen vier Antriebseinheiten 14 in Form von Elektromotoren und zum anderen einen Mikrocontroller 15 zur Ansteuerung der Elektromotoren.

In der Staubsammeleinheit 2 ist weiterhin eine Steuer- und Navigationseinrichtung 16 vorgesehen, die dem selbstständigen Verfahren der Staubsammeleinheit und der Bodendüse dient. Die Steuer- und Navigationseinrichtung 16 ist sowohl mit dem Mikrocontroller 15 der Antriebseinrichtung als auch mit einem weiteren Mikrocontroller 17 verbunden, der Teil der Einrichtungen zur Ortsbestimmung ist. In dem Mikrocontroller 17 werden Datensignale von unterschiedlichen Sensoren und/oder Kameras verarbeitet und der Steuer- und Navigationseinrichtung 16 zur Verfügung gestellt.

Die Steuer- und Navigationseinrichtung 16 ist außerdem mit der Motorgebläseeinheit 9 verbunden, um diese anzusteuern.

Die Strom- bzw. Spannungsversorgung erfolgt in dem gezeigten Beispiel über einen Akku 18, der drahtlos oder drahtgebundenen aufgeladen werden kann. Das Aufladen kann an einer Ladestation erfolgen, die von dem Roboter selbstständig angefahren wird. An der Ladestation kann zusätzlich der Staubsammelraum automatisch gereinigt (beispielsweise ausgesaugt) werden, um die Kapazität des Gerätes zu erhöhen, also die Reichweite zu verbessern. Zusätzlich kann auch der Ausblasfilter an der Ladestation abgereinigt werden. Auch dadurch kann eine erhöhte Nutzungsdauer erreicht werden. Um den Platzbedarf des Roboters an der Ladestation zu minimieren, kann im Auflade- oder Reinigungsbetrieb die Bodendüse unter der Staubsammeleinheit positioniert werden. Dazu wird die Staubsammeleinheit unter Verwendung einer Hebeeinrichtung automatisch hochgefahren und somit ihre Bodenfreiheit erhöht, so dass die Bodendüse darunter fahren kann.

Der Übersichtlichkeit halber sind nicht alle Stromversorgungsverbindungen in der Figur wiedergegeben.

Die Bodendüse weist ebenfalls eine Antriebseinrichtung für ihre vier Räder 5 auf, wobei die Antriebseinrichtung, wie im Falle der Staubsammeleinheit 2, einen Mikrocontroller 15 sowie vier Elektromotoren 14 umfasst. Die Steuersignale für die Antriebseinrichtung der Bodendüse 3 kommen von der Steuer- und Navigationseinrichtung 16, die in der Staubsammeleinheit 2 angeordnet ist. Die Übermittlung der Signale erfolgt über eine Verbindungsleitung 19, die beispielsweise in der Wandung des Saugschlauchs angeordnet sein kann. Alternativ könnte diese Signalübertragung allerdings auch drahtlos erfolgen.

Die Strom- und Spannungsversorgung erfolgt über den Akku 18 der Staubsammeleinheit 2. Hierfür ist eine Leitung 20 vorgesehen, die in der Wandung des Saugschlauchs angeordnet ist.

Bei dem in Figur 1 gezeigten Beispiel handelt es sich um einen Beutelsauger. Dies bedeutet, dass in der Staubsammeleinheit 2 ein Staubsaugerfilterbeutel angeordnet ist, in dem der eingesaugte Schmutz und Staub abgeschieden wird. Bei diesem Staubsaugerfilterbeutel kann es sich insbesondere um einen Flachbeutel handeln, dessen Beutelwandungen eine oder mehrere Lagen von Vlies- und/oder Vliesstoff umfassen. Der Staubsaugerfilterbeutel ist als Wegwerfbeutel ausgeführt.

Bei der Verwendung insbesondere von einlagigen Staubsaugerfilterbeuteln, bei denen die Beutelwand beispielsweise aus genau einer Vliesstofflage in Form eines Spunbonds besteht, ist die Verwendung eines Ausblasfilters vorteilhaft. Mit dem Ausblasfilter kann Feinstaub gefiltert werden, der im Staubsaugerfilterbeutel nicht abgeschieden wurde. Ein solcher Ausblasfilter kann eine Fläche von wenigstens 800 cm² aufweisen. Er kann insbesondere plissiert bzw. gefaltet ausgebildet sein, um eine große Oberfläche bei kleinerer Grundfläche (als die Oberfläche) zu haben.

Der Saugschlauch 4 hat typischerweise einen Durchmesser in einem Bereich von 25 mm bis 50 mm und eine Länge in einem Bereich von 500 mm bis 2500 mm.

Alternativ zu dem oben Beschriebenen kann der Staubsaugerroboter auch ein beutelloser Sauger sein, bei dem die Staubsammeleinheit 2 einen Fliehkraft- bzw. Zyklonabscheider umfasst, in dem die eingesaugten Schmutz- und Staubpartikel mittels der Fliehkraft abgeschieden werden. Alternativ kann der beutellose Staubsauger auch als Prallabscheider ausgebildet sein.

Insbesondere im Falle beutelloser Sauger weist die Staubsammeleinrichtung einen Ausblasfilter auf, mit dem Feinstaub gefiltert wird, der im Fliehkraftabscheider nicht abgeschieden wurde. Dieser Ausblasfilter kann eine Fläche von wenigstens 800 cm² aufweisen. Er kann insbesondere plissiert bzw. gefaltet ausgebildet sein, um eine große Oberfläche bei kleinerer Grundfläche zu haben. Dabei kann der Ausblasfilter in einer Halterung vorgesehen sein, wie sie in der europäischen Patentanmeldung Nr. 14179375.2 beschrieben ist.

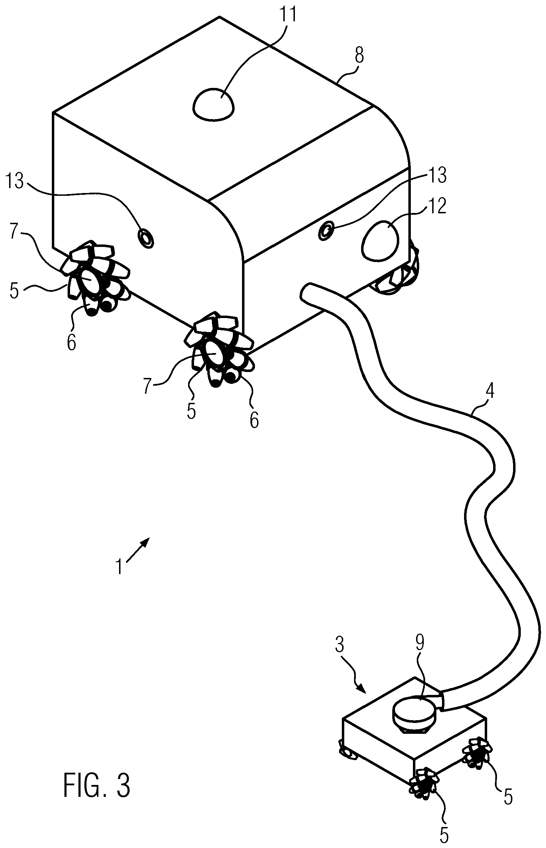

Figur 3 illustriert schematisch ein alternatives Ausführungsbeispiel, bei dem für gleiche Elemente die gleichen Bezugszeichen wie in Figur 1 verwendet werden. Bei dem in Figur 3 gezeigten Beispiel ist an der Bodendüse 3 eine Motorgebläseeinheit 9 angeordnet.

Bei der Motorgebläseeinheit 9 handelt es sich wiederum um einen Dirty-Air-Motor oder Schmutzluftmotor mit einem Radialgebläse. Die Motorgebläseeinheit weist ein Gebläserad auf, dessen Achse im bestimmungsgemäßen Gebrauch parallel zur zu saugenden Fläche und senkrecht zur bestimmungsgemäßen Verschieberichtung der Bodendüse angeordnet ist.

Im Betrieb wird durch die Motorgebläseeinheit 9 Luft angesaugt. Die Luftströmung tritt dabei durch eine Öffnung der Bodendüse 3 in den Staubsaugerroboter 1 ein, wird durch die Motorgebläseeinheit 9 geleitet und strömt danach in den Saugschlauch 4. Aufgrund der Anordnung der Motorgebläseeinheit 9 auf der Bodendüse 3 und - in Luftströmungsrichtung-vor dem Saugschlauch 4, herrscht im Saugschlauch 4 und in der Staubsammeleinheit 2 ein Überdruck.

Im Übrigen finden die in Zusammenhang mit Figur 1 beschriebenen Merkmale auch im Beispiel der Figur 3 Anwendung.

In den beschriebenen Ausführungsbeispielen ist es nicht erforderlich, dass an oder in der Bodendüse 3 eine Bürstenwalze (bspw. eine Klopfbürste und/oder rotierende Bürste) vorgesehen ist.

## Patentansprüche

1. Staubsaugerroboter (1), umfassend eine auf Rädern (5) gelagerte Staubsammeleinheit (2), einen Saugschlauch (4) und eine auf Rädern (5) gelagerte Bodendüse (3), wobei die Bodendüse über den Saugschlauch mit der Staubsammeleinheit fluidisch verbunden ist, weiterhin umfassend eine Motorgebläseeinheit (9) zum Ansaugen eines Luftstroms durch die Bodendüse,
wobei die Staubsammeleinheit eine Antriebseinrichtung (14, 15) aufweist, um wenigstens eines der Räder der Staubsammeleinheit anzutreiben, und
wobei die Bodendüse eine Antriebseinrichtung (14, 15) aufweist, um wenigstens eines der Räder der Bodendüse anzutreiben;
**dadurch gekennzeichnet, dass**
die Motorgebläseeinheit zwischen der Bodendüse und der Staubsammeleinheit derart angeordnet ist, dass ein durch die Bodendüse angesaugter Luftstrom durch die Motorgebläseeinheit hindurch in die Staubsammeleinheit strömt.

2. Staubsaugerroboter nach Anspruch 1, wobei die Motorgebläseeinheit zwischen der Bodendüse und dem Saugschlauch derart angeordnet ist, dass der durch die Bodendüse angesaugte Luftstrom durch die Motorgebläseeinheit hindurch in den Saugschlauch strömt.

3. Staubsaugerroboter nach Anspruch 1 oder 2, wobei die Motorgebläseeinheit auf und/oder über der Bodendüse, insbesondere unmittelbar auf und/oder über der Bodendüse, angeordnet ist.

4. Staubsaugerroboter nach Anspruch 1, wobei die Motorgebläseeinheit zwischen dem Saugschlauch und der Staubsammeleinheit derart angeordnet ist, dass der durch die Bodendüse eingesaugt Luftstrom durch den Saugschlauch hindurch in die Motorgebläseeinheit und durch die Motorgebläseeinheit hindurch in die Staubsammeleinheit strömt.

5. Staubsaugerroboter nach einem der vorangegangenen Ansprüche, wobei die Staubsammeleinheit ein Gehäuse und einen in dem Gehäuse angeordneten Staubabscheider umfasst, wobei die Motorgebläseeinheit auf, an oder in dem Gehäuse angeordnet ist.

6. Staubsaugerroboter nach einem der vorangegangenen Ansprüche, wobei eines der Räder, mehrere oder alle Räder der Staubsammeleinheit und/oder eines der Räder, mehrere oder alle Räder der Bodendüse omnidirektionale Räder sind.

7. Staubsaugerroboter nach einem der vorangegangenen Ansprüche, wobei die Motorgebläseeinheit derart ausgebildet ist, dass sie bei einer elektrischen Aufnahmeleistung von weniger als 450 W gemäß DIN EN 60312-1 bei Blende 8 einen Volumenstrom von mehr als 30 l/s, bei einer elektrischen Aufnahmeleistung von weniger als 250 W gemäß DIN EN 60312-1 bei Blende 8 einen Volumenstrom von mehr als 25 l/s und/oder bei einer elektrischen Aufnahmeleistung von weniger als 100 W gemäß DIN EN 60312-1 bei Blende 8 einen Volumenstrom von mehr als 10 l/s erzeugt.

8. Staubsaugerroboter nach einem der vorangegangenen Ansprüche, wobei der Saugschlauch einen Durchmesser in einem Bereich von 25 mm bis 50 mm und/oder eine Länge in einem Bereich von 500 mm bis 2500 mm hat.

9. Staubsaugerroboter nach einem der vorangegangenen Ansprüche, umfassend einen Ausblasfilter, insbesondere mit einer Filterfläche von wenigstens 800 cm².

10. Staubsaugerroboter nach einem der vorangegangenen Ansprüche, wobei der Staubsaugerroboter ein Beutelsauger, insbesondere mit einer Filterfläche von wenigstens 800 cm² ist.

11. Staubsaugerroboter nach Anspruch 10, umfassend einen Staubsaugerfilterbeutel, wobei der Staubsaugerfilterbeutel in Form eines Flachbeutels und/oder als Wegwerfbeutel ausgebildet ist, und/oder
wobei die Beutelwand des Staubsaugerfilterbeutels eine oder mehrere Lagen eines Vlieses und/oder eine oder mehrere Lagen eines Vliesstoffes umfasst.

12. Staubsaugerroboter nach einem der Ansprüche 1 - 9, wobei der Staubsaugerroboter ein beutelloser Sauger, insbesondere mit einem Ausblasfilter mit einer Filterfläche von wenigstens 800 cm², ist.

13. Staubsaugerroboter nach Anspruch 12, wobei die Staubsammeleinheit einen Prallabscheider oder einen Fliehkraftabscheider umfasst.

14. Staubsaugerroboter nach einem der vorangegangenen Ansprüche, wobei die Motorgebläseeinheit ein Radialgebläse aufweist.

15. Staubsaugerroboter nach einem der vorangegangenen Ansprüche, wobei die Bodendüse keine rotierende Bürste aufweist.

16. Staubsaugerroboter nach einem der vorangegangenen Ansprüche, umfassend eine Steuer- und Navigationseinrichtung (16) zum selbstständigen Verfahren der Bodendüse und/oder der Staubsammeleinheit.

17. Staubsaugerroboter nach einem der vorangegangenen Ansprüche, umfassend eine oder mehrere Einrichtungen (11; 12; 13) zur Ortsbestimmung.

## Claims

1. A robot vacuum cleaner (1) comprising a dust collection unit (2) supported on wheels (5), a suction hose (4), and a floor nozzle (3) supported on wheels (5), the floor nozzle being in fluidic communication with the dust collection unit via the suction hose, and further comprising a motor fan unit (9) for sucking in a flow of air through the floor nozzle,
wherein the dust collection unit comprises a driving device (14, 15) for driving at least one of the wheels of the dust collection unit, and
wherein the floor nozzle comprises a driving device (14, 15) for driving at least one of the wheels of the floor nozzle;
**characterized in that**
the motor fan unit is arranged between the floor nozzle and the dust collection unit such that a flow of air sucked in through the floor nozzle passes through the motor fan unit and flows into the dust collection unit.

2. The robot vacuum cleaner according to claim 1, wherein the motor fan unit is arranged between the floor nozzle and the suction hose such that the flow of air sucked in through the floor nozzle passes through the motor fan unit and flows into the suction hose.

3. The robot vacuum cleaner according to claim 1 or 2, wherein the motor fan unit is arranged on and/or over the floor nozzle, in particular directly on and/or over the floor nozzle.

4. The robot vacuum cleaner according to claim 1, wherein the motor fan unit is arranged between the suction hose and the dust collection unit such that the flow of air sucked in through the floor nozzle passes through the suction hose and flows into the motor fan unit, and passes through the motor fan unit and flows into the dust collection unit.

5. The robot vacuum cleaner according to one of the preceding claims, wherein the dust collection unit comprises a housing and a dust collector arranged within said housing, the motor fan unit being arranged on, at or in said housing.

6. The robot vacuum cleaner according to one of the preceding claims, wherein one of the wheels, a plurality of or all of the wheels of the dust collection unit and/or one of the wheels, a plurality of or all of the wheels of the floor nozzle are omnidirectional wheels.

7. The robot vacuum cleaner according to one of the preceding claims, wherein the motor fan unit is configured such that it generates, with an electric input power of less than 450 W according to DIN EN 60312-1 using aperture 8, a volumetric flow rate of more than 30 l/s, with an electric input power of less than 250 W according to DIN EN 60312-1 using aperture 8, a volumetric flow rate of more than 25 I/s, and/or, with an electric input power of less than 100 W according to DIN EN 60312-1 using aperture 8, a volumetric flow rate of more than 10 I/s.

8. The robot vacuum cleaner according to one of the preceding claims, wherein the suction hose has a diameter in a range of 25 mm to 50 mm and/or a length in a range of 500 mm to 2500 mm.

9. The robot vacuum cleaner according to one of the preceding claims, comprising an exhaust filter, in particular an exhaust filter having a filter area of at least 800 cm².

10. The robot vacuum cleaner according to one of the preceding claims, wherein the robot vacuum cleaner is a bag-type vacuum cleaner, in particular a bag-type vacuum cleaner having a filter area of at least 800 cm².

11. The robot vacuum cleaner according to claim 10, comprising a vacuum cleaner filter bag, wherein the vacuum cleaner filter bag is configured in the form of a flat bag and/or a disposable bag and/or
wherein the bag wall of the vacuum cleaner filter bag comprises one or a plurality of layers of a nonwoven and/or one or a plurality of layers of a nonwoven fabric.

12. The robot vacuum cleaner according to one of the claims 1 to 9, wherein the robot vacuum cleaner is a bagless vacuum cleaner, in particular a bagless vacuum cleaner having an exhaust filter with a filter area of at least 800 cm².

13. The robot vacuum cleaner according to claim 12, wherein the dust collection unit comprises an impact separator or a centrifugal force separator.

14. The robot vacuum cleaner according to one of the preceding claims, wherein the motor fan unit comprises a radial fan.

15. The robot vacuum cleaner according to one of the preceding claims, wherein the floor nozzle does not comprise any rotating brush.

16. The robot vacuum cleaner according to one of the preceding claims, comprising a control and navigation unit (16) for an automatic movement of the floor nozzle and/or of the dust collection unit.

17. The robot vacuum cleaner according to one of the preceding claims, comprising one or a plurality of position determination means (11; 12; 13).

## Revendications

1. Robot-aspirateur (1) comprenant une unité de collecte de poussière (2) montée sur roues (5), un tuyau d'aspiration (4) et une buse de sol (3) montée sur roues (5), robot-aspirateur
dans lequel la buse de sol est reliée, sur le plan de l'écoulement des fluides, à l'unité de collecte de poussière, par l'intermédiaire du tuyau d'aspiration, et le robot-aspirateur comprenant par ailleurs un groupe moto-ventilateur (9) pour aspirer un flux d'air à travers la buse de sol,
dans lequel l'unité de collecte de poussière comprend un dispositif d'entraînement (14, 15) pour entraîner au moins l'une des roues de l'unité de collecte de poussière, et
dans lequel la buse de sol comprend un dispositif d'entraînement (14, 15) pour entraîner au moins l'une des roues de la buse de sol ;
**caractérisé en ce que**
le groupe moto-ventilateur est agencé entre la buse de sol et l'unité de collecte de poussière de façon telle, qu'un flux d'air aspiré à travers la buse de sol s'écoule, à travers le groupe moto-ventilateur, dans l'unité de collecte de poussière.

2. Robot-aspirateur selon la revendication 1, dans lequel le groupe moto-ventilateur est agencé entre la buse de sol et le tuyau d'aspiration de façon telle, qu'un flux d'air aspiré à travers la buse de sol s'écoule, à travers le groupe moto-ventilateur, dans le tuyau d'aspiration.

3. Robot-aspirateur selon la revendication 1 ou la revendication 2, dans lequel le groupe moto-ventilateur est agencé sur et/ou au-dessus de la buse de sol, notamment directement sur et/ou au-dessus de la buse de sol.

4. Robot-aspirateur selon la revendication 1, dans lequel le groupe moto-ventilateur est agencé entre le tuyau d'aspiration et l'unité de collecte de poussière de manière telle, que le flux d'air aspiré à travers la buse de sol s'écoule à travers le tuyau d'aspiration jusqu'au groupe moto-ventilateur, et à travers le groupe moto-ventilateur jusque dans l'unité de collecte de poussière.

5. Robot-aspirateur selon l'une des revendications précédentes, dans lequel l'unité de collecte de poussière comprend un carter et un séparateur de poussière agencé dans le carter, le groupe motoventilateur étant agencé au-dessus, sur ou dans le carter.

6. Robot-aspirateur selon l'une des revendications précédentes, dans lequel l'une des roues, plusieurs ou toutes les roues de l'unité de collecte de poussière, et/ou l'une des roues, plusieurs ou toutes les roues de la buse de sol sont des roues omnidirectionnelles.

7. Robot-aspirateur selon l'une des revendications précédentes, dans lequel le groupe moto-ventilateur est configuré de manière à ce qu'il produise, pour une puissance électrique absorbée de moins de 450 W selon DIN 60312-1 et pour une ouverture de 8, un débit volumique de plus de 30 l/s, pour une puissance électrique absorbée de moins de 250 W selon DIN 60312-1 et pour une ouverture de 8, un débit volumique de plus de 25 l/s, et/ou pour une puissance électrique absorbée de moins de 100 W selon DIN 60312-1 et pour une ouverture de 8, un débit volumique de plus de 10 l/s.

8. Robot-aspirateur selon l'une des revendications précédentes, dans lequel le tuyau d'aspiration possède un diamètre situé dans une plage de 25 mm à 50 mm et/ou une longueur située dans une plage de 500 mm à 2500 mm.

9. Robot-aspirateur selon l'une des revendications précédentes, comprenant un filtre de sortie d'air, notamment avec une surface filtrante d'au moins 800 cm².

10. Robot-aspirateur selon l'une des revendications précédentes, le robot-aspirateur étant un aspirateur à sac, notamment avec une surface filtrante d'au moins 800 cm².

11. Robot-aspirateur selon la revendication 10, comprenant un sac filtrant d'aspirateur, le sac filtrant d'aspirateur se présentant sous la forme d'un sac plat et/ou d'un sac à usage unique jetable, et/ou la paroi de sac du sac filtrant d'aspirateur comprenant une ou plusieurs couches d'un non-tissé et/ou une ou plusieurs couches d'une étoffe de non-tissé.

12. Robot-aspirateur selon l'une des revendications 1 - 9, le robot-aspirateur étant un aspirateur sans sac, notamment avec un filtre de sortie d'air présentant une surface filtrante d'au moins 800 cm².

13. Robot-aspirateur selon la revendication 12, dans lequel l'unité de collecte de poussière comprend un séparateur à impact ou un séparateur à force centrifuge.

14. Robot-aspirateur selon l'une des revendications précédentes, dans lequel le groupe moto-ventilateur comprend un ventilateur radial.

15. Robot-aspirateur selon l'une des revendications précédentes, dans lequel la buse de sol ne comporte pas de brosse rotative.

16. Robot-aspirateur selon l'une des revendications précédentes, comprenant un dispositif de commande et de navigation (16) pour le déplacement autonome de la buse de sol et/ou de l'unité de collecte de poussière.

17. Robot-aspirateur selon l'une des revendications précédentes, comprenant un ou plusieurs dispositifs (11; 12; 13) de localisation de position.
